(19) Europäisches Patentamt
European Patent Office
Office européen des brevets

(11) Publication number: **0 455 053 A2**

(12) # EUROPEAN PATENT APPLICATION

(21) Application number: **91106184.4**

(51) Int. Cl.[5]: **C08L 83/10**, C08L 23/04

(22) Date of filing: **18.04.91**

(30) Priority: **01.05.90 US 517270**

(43) Date of publication of application: **06.11.91 Bulletin 91/45**

(84) Designated Contracting States: **DE FR GB IT**

(71) Applicant: **MOBAY CORPORATION**
**Mobay Road**
**Pittsburgh Pennsylvania 15205(US)**

(72) Inventor: **Price, Ronald L.**
**271 Fernwood Avenue, Woodland Estates**
**Weirton, 26062, WV(US)**
Inventor: **Shu, Peter H.C.**
**Bayer Taiwan 237 Sung-Tschang Road 8th Floor**
**Taipai 10477(TW)**
Inventor: **Krishnan, Sivaram**
**1653 Little Meadow Road**
**Pittsburgh, PA 15241(US)**
Inventor: **Witman, Mark W.**
**925 Burgess Hill Road**
**Naperville, IL 60540(US)**

(74) Representative: **Gremm, Joachim, Dr. et al**
**Bayer AG Konzernverwaltung RP Patente Konzern**
**W-5090 Leverkusen 1, Bayerwerk(DE)**

(54) **Wear resistant molding compositions.**

(57) The invention relates to thermoplastic molding compositions and to articles molded therefrom, which comprise a siloxane copolycarbonate and an additive amount of an ultra high molecular weight polyethylene. The compositions are useful in the preparation of molded articles having an exceptionally high resistance to friction induced wear.

EP 0 455 053 A2

## Field of the Invention

The present invention relates to thermoplastic molding compositions and more particularly to compositions based on a copolycarbonate resin and to articles made therefrom.

## BACKGROUND OF THE INVENTION

Articles molded from polycarbonate resins are well known and are widely used in a variety of fields. Among their attractive properties are their impact strength and thermal stability. These properties make polycarbonate resins suitable in the preparation of molded articles such as parts in business machines where in applications such as cartridges or machine housings or generally in applications such as gear applications and the like where the parts are designed to undergo sliding motion or mechanical grinding, they are subjected to frictional forces and thus to wear which causes untimely failure.

Polydiorganosiloxane/polycarbonate block copolymers are known. U.S. Patents 3,189,662 and 3,419,634 as well as German Published Specification 3,334,782 are noted for their disclosure of polydiorganosiloxane/polycarbonate block copolymers.

Also noted in this regard is U.S. Patent 3,431,224 which disclosed compositions containing polycarbonate and polyethylene to have an improved level of resistance to environmental stress cracking and crazing and U.S. Patent 3,477,978 which disclosed a heat moldable polycarbonate composition containing a polyethylene. Additionally relevant is the disclosure in U.S. Patent 3,437,631 of pigmented compositions containing polycarbonate and polyethylene characterized in their improved impact strength. Canadian Patent 734,562 disclosed compositions with high slip properties suitable for the preparation of films containing polycarbonate and polyethylene. A process for preparing polycarbonate alloys, disclosed in U.S. Patent 3,801,673, described the preparation of alloys containing polyethylene. U.S. Patent 4,335,032 disclosed a composition containing polycarbonate, polyorganosiloxane and a polyolefin. The composition is said to have reduced melt viscosity, less tendency to embrittle upon molding or aging at elevated temperatures and a characteristic high impact strength.

## SUMMARY OF THE INVENTION

The invention relates to thermoplastic molding compositions and to articles molded therefrom, which comprise a siloxane copolycarbonate and an additive amount of an ultra high molecular weight polyethylene. The compositions are useful in the preparation of molded articles having an exceptionally high resistance to friction induced wear.

## DETAILED DESCRIPTION OF THE INVENTION

The polydiorganosiloxane/polycarbonate copolymers of the invention (hereinafter referred to as siloxane-copolycarbonate) are known and are readily available in commerce. They are characterized in that they have a weight average molecular weight of about 10,000 to 30,000, preferably about 15,000 to 25,000 as determined by ultracentrifugation or by light scattering and by having a content of poly-(diorganosiloxane) structural units of between about 2.5 and 25, preferably between about 5.0 and 10.0 percent relative to the weight of the copolymer and in that the degree of polymerization of the polydiorganosiloxane structural units is about 10 to 100, preferably 20 to 60.

The polydiorganosiloxane copolycarbonates of the invention are well known in the art. U.S. Patents 3,189,662; 3,419,634; 3,821,325; 3,832,419 and 4,584,360 all contain descriptions of the copolycarbonate and some disclose the method for the preparation. These patents are incorporated herein by reference.

The structure of the copolycarbonate of the invention is

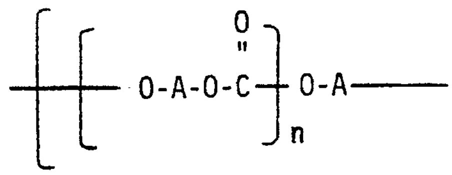

(Ia)

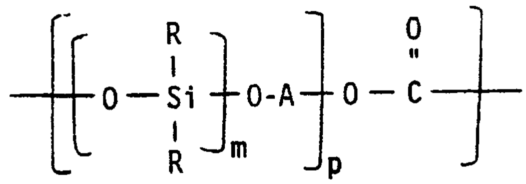

wherein

| | |
|---|---|
| n | is an integer of from 1 to about 1000, |
| m | is an integer of from 1 to about 500, |
| p | is an integer of from 1 to about 10, |
| A | is a derivative of an aromatic dihydroxy compound and |
| R and R' | independently are a $C_1$-$C_{20}$ alkyl or a $C_6$-$C_{14}$ aryl radical. Both the aryl and alkyl radicals may be substituted by halogen atoms. |

Most preferred R and R' radicals are selected from the group consisting of methyl, ethyl, propyl, n- and tert.-butyl, chloromethyl, trifluoropropyl, phenyl, chlorophenyl and naphthyl. The block copolymers of the invention comprise about 40 to 99.5, preferably 85 to 99 percent by weight of polycarbonate segments.

The preferred derivatives of diphenol radicals are:

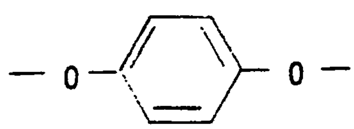

(II)

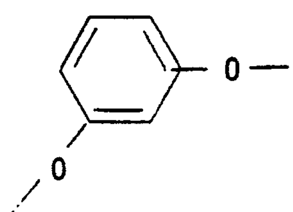

(III)

and

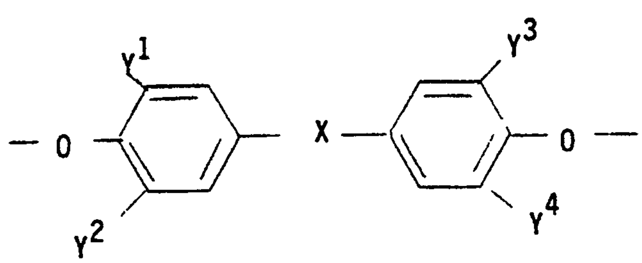

(IV)

wherein X denotes a single bond, $-CH_2$

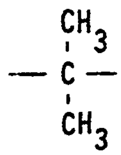 , 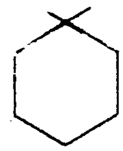

-O-, -S-, $-SO_2-$ and

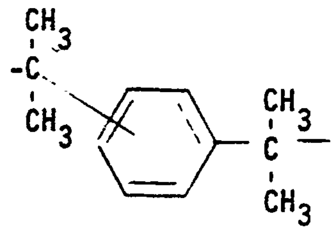

and $Y^1$ to $Y^4$ independently denote a hydrogen atom, $C_1$-$C_4$ alkyl or a halogen atom.

Preferred diphenol radicals are 2,2-bis-(4-hydroxyphenyl)-propane, 1,1-bis-(4-hydroxyphenyl)-cyclohexane, 2,2-bis-(3,5-dichloro-4-hydroxyphenyl)propane, 2,2-bis-(3,5-dimethyl-4-hydroxyphenyl)-propane, bis-(3,5-dimethyl-4-hydroxyphenyl)-ethane, bis-(3,5-dimethyl-4-hydroxyphenyl)-methane, and bis-(4-hydroxyphenyl) sulphide.

The copolymer may include branching agents and/or terminal groups. Preferred branching agents are compounds having a functionality of at least 3 and are described in DE-OS (German Published Specification) 1,570,533 and 1,595,762 and in U.S. Patent Specification 3,544,514 which are incorporated herein by reference. These include trihydric phenols, aromatic tricarboxylic acids and hydroxycarboxylic acids having at least three functional groups. Examples of preferred branching agents are 2,4-bis-(4-hydroxyphenyl-isopropyl)-phenol, 2,6-bis-(2'-hydroxy-5'-methylbenzyl)-4-methylphenol, 2-(4-hydroxyphenyl)-2-(2,4-dihydroxyphenyl)-propane, 1,4-bis-(4,4'-dihydroxytriphenylmethyl)benzene, 2,4-dihydroxybenzoic acid, trimesic acid, cyanuryl chloride, 3,3-bis-(4-hydroxy-phenyl)-2-oxo-2,3-dihydroindole and 3,3-bis-(4-hydroxy-3-methyl-phenyl)-2-oxo-2,3-dihydroindole.

If the block copolymers are to be employed in branched form, the amount of branching agent is 0.05 to 2 mol % relative to the aromatic dihydroxy components.

The terminal groups for the block copolymer are radicals of phenol, benzoic acid, mono- and dialkylphenols and mono- and dialkylbenzoic acids wherein alkyl substituents contain a total of up to 20 carbon atoms per terminal group. Preferred terminal groups correspond to the formula

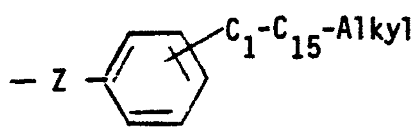 (V)

in which

Z denotes -O- or

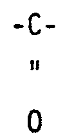

Examples of preferred terminal groups are the radicals of phenol, p-tert.-butyl-phenol, p-tert.-octylphenol, p-nonylphenol, 3,5-di-tert.-butyl-phenol, 2-(3,5-dimethylheptyl)-phenol and 4-(3,5-dimethylheptyl)-phenol.

In place of free phenols, their halocarbonates may be employed, and in place of the carboxylic acids,

their acid chlorides may be employed.

The amount of terminal groups is preferably 1 to 10 mol %, relative to the aromatic dihydroxy component.

The block copolymer may be prepared by the two-phase interfacial process under conventional conditions from α,α-bis(hydroxyaryloxy)-polydiorganosiloxanes, bisphenols, carbonic acid derivatives, for example phosgene, optionally with chain terminators and/or branching agents. The transesterification process and the process in a homogeneous solution are also suitable for the preparation.

The ultra high molecular weight polyethylene (UHMWPE) suitable in the practice of the present invention is known and is readily available in commerce. It is characterized by its molecular weight which is in the range of about 3.1M to 5.0M (M = million), preferably 3.5M to 4.0M.

In the molding of articles in accordance with the present invention, siloxane copolycarbonate is blended with an additive amount, preferably about 1.0 to 7.0, more preferably about 2.0 to 5.0 percent relative to the weight of the composition of the polyethylene of the invention.

The wear resistance of the compositions of the invention is considerably better than that of compositions which are based on conventional polycarbonate resins.

The articles of the invention are thus molded from siloxane copolycarbonate based compositions which may include as additives homopolycarbonate resins or any of the additives known in the polycarbonate art for their conventional function. These include fillers, reinforcing agents, flame retarding agent, stabilizers and mold release agents.

In evaluating the articles of the invention, wear tests were conducted with a thrust washer test apparatus. The method and apparatus have been described in ASTM D-3702. Essentially, the thrust washer is mounted in an anti-friction bearing equipment with a torque arm. The test specimen holder is equipped with a thermocouple probe. A portion of the thrust washer is raised and bears against a dry, cold-rolled, carbon steel wear ring with 12 to 16 micro-inch finish and 18 to 22 Rockwell C scale hardness at room temperature. Each evaluation is conducted with a new wear ring which has been cleaned and weighed on an analytical balance. Bearing temperature and friction torque are continuously monitored. The test duration is dependent upon the period required to achieve 360 degree contact between the raised portion of the thrust washer and the wear ring. The average wear factor and duration of this break in period are reported. Reported wear factors for a tested compound are based on equilibrium wear rate independent of break in wear. The volume wear is determined as the weight loss divided by the density of the material, and the value if a factor in determining the wear factor (K).

The determination of the limiting PV for a composition is determined by a method described in the above cited publication. Essentially, a sample cylindrical half bearing, generally 1 by 1 by 0.060 in wall is installed in an antifriction bearing mounted in the test apparatus. The antifriction bearing holder is equipped with a torque arm.

Load is applied through the antifriction bearing to the test bearing. The shaft can be rotated at surface velocities from 10 to 1000 ft/min. The load (p.s.i.), velocity (ft/min.) friction torque (1b.-ft.) and the temperature (°F ) at the bearing holder, 0.125 in. from the rubbing surfaces, are continuously monitored. A minimum of three velocities are selected to cover a practical range, i.e., 10,100 and 1000 ft./min. At each velocity, a load stepping test is conducted. Friction torque and bearing temperature which are plotted continuously are allowed to reach equilibrium each loading. The equilibrium condition is maintained for approximately 30 minutes, then the load is increased. At an advanced load increment the friction torque and/or temperature will not stabilize. The slope of the curve will increase sharply in the friction torque and/or temperature plot. The increase in temperature and/or torque will result in bearing failure. The pressure limits at several velocities provide a curve of the limiting PV capability of the bearing material.

A comparison between the composition of the invention and a corresponding composition containing only the unmodified resin was conducted following the procedures described above. Accordingly, the PV limit, wear rate and K factor were determined. In the comparison, the siloxane copolycarbonate used had a melt flow index of 6.0 gm/10 min. and a weight average molecular weight of about 25,000, its degree of polymerization was 87. The siloxane content of the resin was about 5 wt. %. The polyethylene used in the course of the experiments reported below was GUR-412 which is a commercial product of Hoechst Chemical Inc. The molecular weight of the polyethylene used was about $3.5 \times 10^6$.

In accordance with the comparison, the composition based on the siloxane copolycarbonate is much more durable than is the unmodified resin in terms of wear resistance. The table below summarizes the results of the evaluations:

| Property | Control Siloxane Copolycarbonate | Siloxane Copolycarbonate + 4% UHMWPE |
|---|---|---|
| PV limit @ 150 fpm | 10 K | 22.5 K |
| Wear rate (gm./hr)* | 0.007 | 0.0079 |
| Wear rate,K factor* | $4.7 \times 10^{-7}$ | $5.4 \times 10^{-8}$ |

* at 50 fpm and 50 p.s.i.

In the table below there are reported data enabling a comparison between the composition of the invention and other, relevant compositions. The polycarbonate resin used in the comparison was Makrolon resin which had a melt flow, in accordance with ASTM D-1238, of 36 gram/10 minutes. The Siloxane copolycarbonate was Makrolon KUI -1198 and the polyethylene was GUR-412.

| Example | Components | K Factor | Improvement(1) |
|---|---|---|---|
| 1 | Polycarbonate | $9.4 \times 10^{-6}$ | |
| 2 | Polycarbonate + 4% UHMWPE | $4.8 \times 10^{-7}$ | x 20 |
| 3 | Siloxane-COPC(2) | $4.7 \times 10^{-7}$ | x 20 |
| 4 | Siloxane-COPC + 4% UHMWPE | $5.4 \times 10^{-8}$ | x 170 |

(1) Improvement in K Factor over the unmodified polycarbonate, Example 1.

(2) COPC = copolycarbonate

It is clear from the above comparison that the composition of the invention, represented by Example 4, has the lowest K Factor which is indicative of low wear rate. While the addition of UHMWPE is known to reduce the coefficient of friction of polycarbonates, it is clear that the value of the K Factor of the composition of the invention is surprisingly and unexpectedly of an extraordinarily high level which could not have been foreseen based on the art noted above.

The invention has been described in detail in the foregoing for the purpose of illustration. It is to be understood that such detail is solely for that purpose and that variation can be made therein by those skilled in the art without departing from the spirit and scope of the invention except as it may be limited by the claims.

## Claims

**1.** A thermoplastic molding composition comprising

(a) a polydiorganosiloxane/polycarbonate block copolymer conforming structurally to

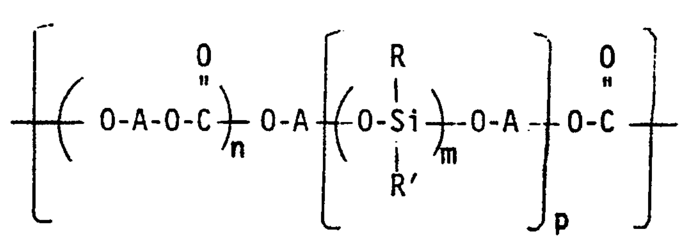

wherein

| | |
|---|---|
| p | is an integer of from 1 to 10, |
| n | is an integer of from 1 to 1000, |
| m | is about 1 to 500, |
| A | is a derivative of an aromatic dihydroxy compound, |
| R and R' | independently are $C_1$-$C_{20}$ alkyl or $C_6$-$C_{14}$ aryl radical and |

(b) about 1 to 7 percent relative to the weight of the composition of a polyethylene resin having a molecular weight of 3.1-5.0 x $10^6$ grams/mole.

**2.** The composition of Claim 1 wherein said (b) is present at an amount of about 2.0 to 5.0 percent.

**3.** The composition of Claim 1 wherein said molecular weight is about 3.5-4.0 x $10^6$ grams/mole.

**4.** The composition of Claim 2 wherein said molecular weight is about 3.5-4.0 x $10^6$ grams/mole.